# EUROPÄISCHE PATENTSCHRIFT

(11) **EP 3 890 911 B1**
(45) Veröffentlichungstag und Bekanntmachung des Hinweises auf die Patenterteilung: **27.09.2023**
(21) Anmeldenummer: 20701004.2
(22) Anmeldetag: 15.01.2020
(51) Int. Cl.: B23B 29/034

(54) **BOHRKOPF ZUM AUSKESSELN VON SACKBOHRUNGEN**
DRILL HEAD FOR CHAMBERING BLIND DRILL-HOLES
TÊTE DE PERÇAGE POUR LE TOURNAGE DE TROUS BORGNES

(30) Priorität: 15.01.2019 DE 102019100890
(43) Veröffentlichungstag der Anmeldung: 13.10.2021
(73) Patentinhaber: botek Präzisionsbohrtechnik GmbH, 72585 Riederich (DE)
(72) Erfinder: STREHLE, Gerhard, 88239 Wangen (DE)
(74) Vertreter: DREISS Patentanwälte PartG mbB
(86) Internationale Anmeldenummer: PCT/EP2020/050888
(87) Internationale Veröffentlichungsnummer: WO 2020/148323

(56) Entgegenhaltungen:
- EP-A1- 0 593 222
- EP-A2- 0 231 852
- EP-A2- 0 382 474
- DE-A1- 3 245 195
- FR-A3- 2 545 395

## Beschreibung

Die Erfindung betrifft einen Bohrkopf, gemäß dem Oberbegriff des Patentanspruchs 1, zum Auskesseln von nicht-zylindrischen Innenkonturen und ein Verfahren zum Herstellen von Sacklochbohrungen unter Verwendung eines Bohrkopfs mit mindestens einem gekröpften Schneidplattenhalter.

Ein Bohrkopf, gemäß dem Oberbegriff des Patentanspruchs 1, geht beispielsweise aus der EP 0 382 474 A2 hervor. Bohrköpfe zum Auskesseln oder Innendreheinrichtungen werden häufig eingesetzt, um im Inneren von Bauteilen eine nicht-zylindrische, rotationssymmetrische Innenkontur herzustellen.

Ein typischer Anwendungsfall solcher Bohrköpfe ist das Auskesseln des geschmiedeten Beins eines Flugzeugfahrwerks. Ein solches Fahrwerksbein hat, den auftretenden Biegemomenten entsprechend, in der Regel eine kegelstumpfförmige Außenkontur. Um den Werkstoff bestmöglich auszunutzen und das Gewicht des Fahrwerksbeins zu minimieren, ist das Fahrwerksbein in vielen Fällen hohl und hat eine ebenfalls kegelstumpfförmige, d.h. nicht-zylindrische Innenkontur.

Zur Herstellung solcher Innenkonturen werden Innendreheinrichtungen oder Bohrköpfe eingesetzt, die ausgehend von einer zylindrischen Führungsbohrung die gewünschte nicht-zylindrische Innenkontur erzeugen. Aus der DE 196 05 069 A1 ist ein solcher Bohrkopf, dort als Innendreheinrichtung bezeichnet, dargestellt. Zur grundsätzlichen Erläuterung des Aufbaus und der Arbeitsweise eines Bohrkopfs wird auf die DE 196 05 069 A1 Bezug genommen.

Anhand der Figur 1 der DE 196 05 069 A1 wird deutlich, dass das Werkstück eine durchgehende Führungsbohrung aufweist. In einem Abschnitt dieser Führungsbohrung wird der Bohrkopf mittels Führungsleisten geführt. Der Bohrkopf vergrößert einen anderen Abschnitt der Führungsbohrung, so dass eine Auskammerung mit der gewünschten Innenkontur entsteht.

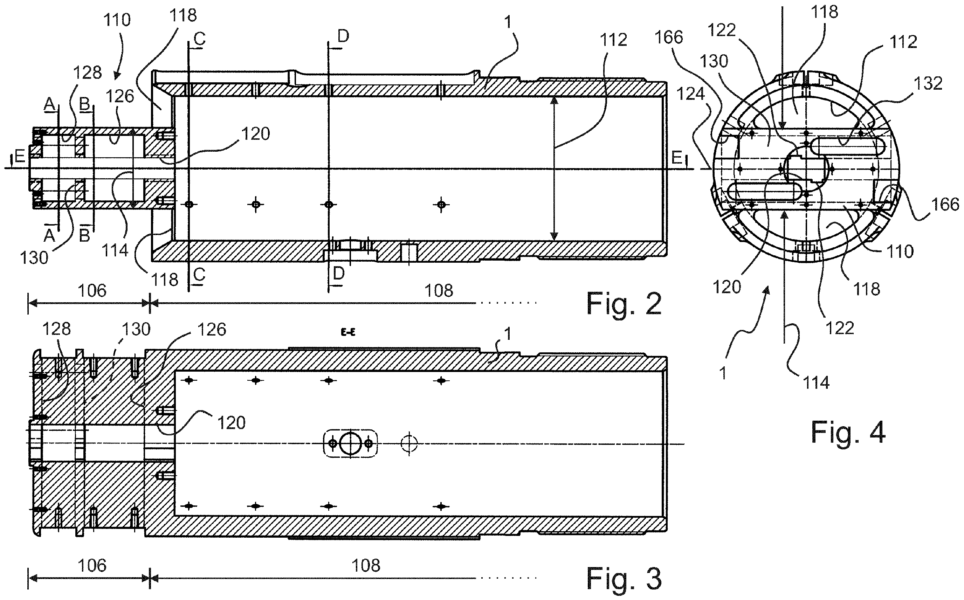

Wenn man das in der Figur 2 der genannten Offenlegungsschrift im Längsschnitt dargestellte Werkzeug betrachtet, wird deutlich, dass die Schneide dieses Bohrkopfs den vorderen Teil der Führungsbohrung nicht erreichen kann, so dass immer ein Teil der Führungsbohrung "stehen" bleibt, so dass erhebliche Potentiale der Gewichtsoptimierung von Bauteilen mit Hilfe dieses Bohrkopfs nicht erschlossen werden können.

Das liegt daran, dass der Zentralschieber wegen des Übersetzungsverhältnisses der Schrägverzahnung zwischen dem Zentralschieber und dem Schneidenschieber einen großen Hub ausführen muss und daher sehr lang ist. In Folge dessen ragt der Deckel für den Zentralschieber weit in axialer Richtung über den Schneidenschieber hinaus.

Als Sackloch wird im Zusammenhang mit der Erfindung eine Bohrung bzw. eine ausgekesselte Innenkontur bezeichnet, deren Ende oder Boden zumindest teilweise durch den Bohrkopf spanend bearbeitet wurde. Das Ende der Sacklochbohrung kann eine ebene, kreisförmige Fläche haben. Der Erfindung liegt die Aufgabe zugrunde, einen Bohrkopf bzw. eine Innendreheinrichtung bereitzustellen, welche das Auskesseln von Sacklochbohrungen ermöglicht. Insbesondere soll es mit dem erfindungsgemäßen Werkzeug möglich sein, ein Sackloch mit einer ebenen Grundfläche herzustellen. Des Weiteren ist es Aufgabe der Erfindung, ein Verfahren zum Herstellen einer solchen Sacklochbohrung bereitzustellen.

Diese Aufgabe wird erfindungsgemäß bei einem Bohrkopf, gemäß dem Patentanspruch 1, umfassend einen Grundkörper mit einem hinteren Ende und einem vorderen Ende, wobei der Grundkörper an dem hinteren Ende eine mechanische Schnittstelle zur Verbindung mit einem Bohrrohr oder einer Tiefbohrmaschine und an dem vorderen Ende einen sich in axialer Richtung erstreckenden Vorsprung aufweist, wobei in dem Vorsprung ein in axialer Richtung verschiebbarer Zentralschieber geführt ist, wobei in dem Vorsprung mindestens eine in radialer Richtung verlaufende erste Ausnehmung ausgebildet ist, wobei in jeder ersten Ausnehmung ein Schneidenschieber geführt ist, wobei der Zentralschieber und der mindestens eine Schneidenschieber derart miteinander gekoppelt sind, dass eine Relativbewegung zwischen Zentralschieber und dem Grundkörper eine radiale Zustell-Bewegung des oder der Schneidenschieber bewirkt, dadurch gelöst, dass in dem Vorsprung mindestens eine in radialer Richtung und parallel zu der mindestens einen ersten Ausnehmung verlaufende zweite Ausnehmung ausgebildet ist, dass in der oder den zweiten Ausnehmungen jeweils ein Schleppschieber geführt ist, und dass jeweils ein Schneidenschieber und ein Schleppschieber derart miteinander gekoppelt sind, dass Zustellbewegungen des Schleppschiebers auf den mit ihm gekoppelten Schneidenschieber übertragen werden.

Es wird eine aufgelöste Bauweise angestrebt, bei der der Schleppschieber vom vorderen Ende des Bohrkopfs gesehen aus hinter dem Schneidenschieber liegt. Durch die erfindungsgemäße Bauweise, wird die Führung des Schneidenschiebers in dem Vorsprung verbessert. Außerdem rücken der oder die Schneidenschieber in axialer Richtung näher an das Ende des Bohrkopfs. Dadurch können auch Sacklochbohrungen im Bereich des bis auf den Grund der Sacklochbohrung bearbeitet werden.

Der Schleppschieber ist bevorzugt über eine Schrägverzahnung mit dem Zentralschieber verbunden und setzt die von der Steuerstange auf den Zentralschieber übertragene Relativbewegung in eine radiale Zustellbewegung um. Über eine mechanische Kopplung, beispielsweise mittels Stiften, von Schleppschieber(n) und Schneidenschieber(n) wird diese Zustellbewegung direkt auf den oder die Schneidenschieber übertragen, welche diese dann an den oder die geraden oder gekröpften Schneidplattenhalter und letztendlich die Schneidplatten übertragen. Diese Bauweise hat zwei wesentliche Vorteile:
Der durch den gekröpften Schneidplattenhalter erforderliche Versatz in Längsrichtung wird verringert. Dadurch wird die Steifigkeit des Schneidplattenhalters erhöht und es kann mit höheren Zerspanleistungen gearbeitet werden.

Durch die doppelte Führung, nämlich durch den Schleppschieber und den Schneidenschieber, wird die Führung des Schneidplattenhalters insgesamt verbessert. Auch das trägt zu einer erhöhten Produktivität bei.

In vorteilhafter Ausgestaltung der Erfindung sind an dem oder den Schneidenschiebern ein gerader oder ein gekröpfter Schneidplattenhalter angeordnet.

Durch den Einsatz eines gekröpften Schneidplattenhalters ist es möglich, die Schneide der an dem Schneidplattenhalter angeordneten Schneidplatte so weit in axialer Richtung nach vorne zu verlagern, dass die Schneide über das vordere Ende des Bohrkopfs hinausragt. Dann ist es möglich, die Sacklochbohrung bzw. den Grund der Sacklochbohrung schrittweise zu vergrößern bis schließlich eine Sacklochbohrung mit einer Grundfläche mit der gewünschten Form und dem gewünschten Durchmesser entstanden ist.

Wenn der Schneidplattenhalter auswechselbar ist, können für andere Bearbeitungen auch gerade, d.h. nicht gekröpfte Schneidplattenhalter eingesetzt werden und auf diese Weise der Anwendungsbereich des erfindungsgemäßen Bohrkopfs erweitert werden.

Damit der gekröpfte Schneidplattenhalter möglichst weit in radialer Richtung eingefahren werden kann, ist vorgesehen, dass der Vorsprung an seinem stirnseitigen Ende mindestens eine Ausnehmung für den oder die Schneidplattenhalter hat, in den dieser eintaucht, wenn dieser voll eingefahren ist.

Dadurch ist es möglich, den wirksamen Durchmesser des Schneidplattenhalters so weit zu verringern, dass die Schneide des Schneidplattenhalters in radialer Richtung nicht über den durch die Führungsleisten bzw. die Dämpfungsleisten des Bohrkopfs vorgegebenen Durchmesser der Führungsbohrung hinausragt. In dieser Stellung ist es möglich, mit der Schneide des Bohrkopfs das Ende der Führungsbohrung anzufahren und dann durch Zustellen des Schneidplattenhalters bzw. des Bohrkopfs schrittweise Material am Ende der Sacklochbohrung abzutragen.

Es hat sich als vorteilhaft erwiesen, wenn ein Schleppschieber und ein Schneidenschieber über Mitnehmerstifte miteinander gekoppelt sind. Diese Art der Kopplung ist sehr steif, lässt sich gut montieren und es ist möglich, bei Bedarf Einzelteile, z. B. den Schleppschieber und den Schneidenschieber, voneinander zu trennen, und beispielsweise einen verschlissenen Schneidenschieber zu ersetzen.

Es hat sich als vorteilhaft erwiesen, wenn eine Relativbewegung zwischen Zentralschieber und dem Grundkörper mittels einer Schrägverzahnung in eine radiale Zustellbewegung des oder der Schneidenschieber umgesetzt wird. Zu diesem Zweck kann es vorgesehen sein, dass an dem Zentralschieber mindestens eine Zahnplatte und an dem oder den Schleppschiebern oder an dem oder den Schneidenschiebern jeweils eine weitere Zahnplatte angeordnet ist.

Um die von dem erfindungsgemäßen Bohrkopf erzeugten Späne zusammen mit dem Kühlschmierstoff abzuführen, ist an einem Übergang zwischen Grundkörper und Vorsprung mindestens ein Durchbruch vorhanden, so dass die Späne und der Kühlschmierstoff in das Innere des Grundkörpers gelangen können und von dort abgeführt werden. Dadurch wird ein Verklemmen der Späne zwischen den Führungsleisten und der Führungsbohrung wirksam verhindert.

Um das Eindringen von Spänen aus dem Innenraum des Grundkörpers in die Führungen bzw. die Ausnehmungen im Vorsprung des Bohrkopfs zu verhindern, ist am Übergang zwischen Grundkörper und Vorsprung eine Abstreifhülse angeordnet. Ein zwischen der Steuerstange und dem Zentralschieber angeordneter Betätiger wird von der Abstreifhülse umgeben und geführt. Durch den sehr kleinen Ringspalt zwischen Betätiger und Abstreifhülse können keine Späne in das Innere des Vorsprungs gelangen.

In weiterer vorteilhafter Ausgestaltung ist vorgesehen, dass in dem Zentralschieber mindestens eine Tasche zur Aufnahme einer Abstimmplatte und einer Zahnplatte vorgesehen ist. Die Abstimmplatte ist zwischen dem Zentralschieber und der Zahnplatte angeordnet und erlaubt erstens das Montieren der Schrägverzahnung. Zweitens kann über unterschiedlich dicke Abstimmplatten das Flankenspiel zwischen den Zahnplatten, welche die Schrägverzahnung bilden, eingestellt werden.

Um das Eindringen von Spänen in das Innere des Vorsprungs zu verhindern, sind an einem stirnseitigen Ende eine Abdeckplatte und/oder eine Zentrierplatte vorhanden. Die mindestens eine zweite Ausnehmung und die mindestens eine erste Ausnehmung sind ebenfalls durch Abdeckplatten abgedeckt.

Ein Ausführungsbeispiel beschreibt ein Verfahren. Dieses Verfahren beinhaltet folgende Schritte:
Einfahren des mindestens einen gekröpften Schneidplattenhalters, so dass die Schneidplatte in radialer Richtung nicht über einen von den Führungsleisten und/oder den Dämpfungsleisten des Bohrkopfs vorgegebenen Radius oder Durchmesser hinausragt,
Anfahren des Endes des Sacklochs mit der mindestens einen Schneidplatte; und
Zustellen der mindestens einen Schneidplatte bei drehendem Bohrkopf und Bewegen des Bohrrohrs in Vorschubrichtung.

Auf diese Weise ist es möglich, Schritt für Schritt die Grundfläche des Sacklochs im Durchmesser zu erweitern, bis der gewünschte Enddurchmesser hergestellt ist.

### Zeichnung:

Es zeigen:
- Figuren 1 bis 19: verschiedene Darstellungen eines Ausführungsbeispiels eines erfindungsgemäßen Bohrkopfs und
- Figuren 20 bis 22: weitere Ansichten eines erfindungsgemäßen Bohrkopfs.

### Beschreibung der Ausführungsbeispiele

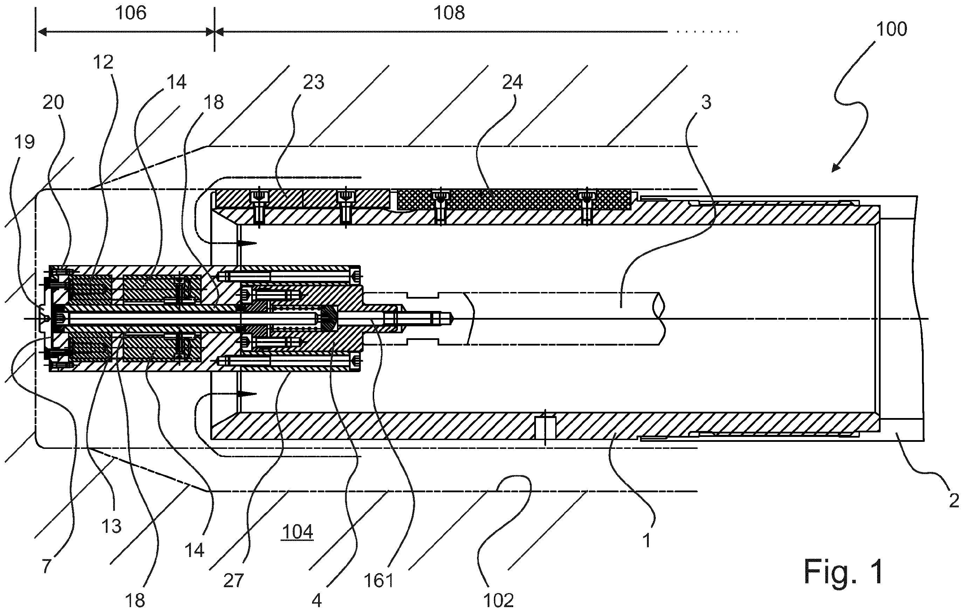

In der Figur 1 ist ein erfindungsgemäßer Bohrkopf, der in seiner Gesamtheit mit dem Bezugszeichen 100 versehen wurde, im Längsschnitt dargestellt. Der Bohrkopf 100 befindet sich in der Figur 1 in einem Sackloch 102, welches sich durch eine Schraffur angedeuteten Werkstück 104 befindet. Sackloch 102 und Werkstück 104 dienen der Veranschaulichung und sind nicht Teil der Erfindung. Als Sackloch wird eine Bohrung mit einem geschlossenen Ende (links in der Figur 1) bezeichnet. Bisweilen soll das geschlossene Ende des Sacklochs als im Wesentlichen ebene und kreisförmige oder kreisringförmige Fläche ausgebildet sein; im Gegensatz zu einem konischen oder auf andere Weise zulaufenden Ende (nicht dargestellt). Solche Sacklochbohrungen mit ebenem Ende sind nach dem derzeitigen Stand der Technik mit Bohrköpfen zum Auskesseln noch nicht herstellbar.

Mit dem erfindungsgemäßen Bohrkopf ist es erstmals gelungen, Sacklöcher 102 deren Ende eine ebene kreisförmige Fläche ist mit einem Bohrkopf zum Auskesseln herzustellen.

Der erfindungsgemäße Bohrkopf 100 ist mit seinem Grundkörper 1 auf einem Bohrrohr 2 aufgeschraubt bzw. auf andere Weise verbunden. Die Schnittstelle zwischen Bohrrohr 2 und Grundkörper 1 ist aus dem Stand der Technik bekannt und wird daher nicht näher erläutert.

Der erfindungsgemäße Bohrkopf 100 kann in axialer Richtung in zwei Bereiche unterteilt werden, nämlich einen vorderen Bereich 106 und einen hinteren Bereich 108. Vereinfacht gesagt, findet die Zerspanung im vorderen Bereich 106 statt, während die Führung und Spanabfuhr im hinteren Bereich 108 erfolgt. Betätigt werden die in der Figur 1 nicht sichtbaren Schneidenschieber 12, 13 über eine axiale Verschiebung der Steuer- oder Zustellstange 3, die mit einem Betätiger 4 verbunden ist. Die Zustellstange 3 ist aus dem Stand der Technik bekannt und wird daher nicht weiter erläutert. Der Betätiger 4 ist mit einem Zentralschieber 18 gekoppelt, der wiederum mittelbar die Zustellung der Schneidenschieber 12, 13 und der daran befestigten Schneidplatten bewirkt.

Der erfindungsgemäße Bohrkopf 100 umfasst eine Vielzahl von Einzelteilen. Dadurch lassen sich die Einzelteile besser herstellen und die Montierbarkeit des erfindungsgemäßen Bohrkopfs wird verbessert. Bevor die Funktionsweise des erfindungsgemäßen Bohrkopfs im Detail erläutert wird, werden zum besseren Verständnis die wichtigsten Bauteile des erfindungsgemäßen Bohrkopfs 100 in den Figuren 2 bis 19 einzeln und in verschiedenen Ansichten dargestellt. Um die Details der Einzelteile des erfindungsgemäßen Bohrkopfs 100 bestmöglich zu offenbaren, sind die Einzelteilzeichnungen in unterschiedlichen Maßstäben dargestellt.

Die Figur 2 zeigt den Grundkörper 1 geschnitten in der gleichen Ansicht wie in der Figur 1, jedoch ohne Einbauten und Zubehörteile.

Die Figur 3 und die Figur 4 zeigen ebenfalls den Grundkörper 1 ohne Anbauteile. In der Figur 3 ist die Schnittebene durch den Grundkörper 1 gegenüber der Figur 2 um 90° gedreht (Schnittebene E-E in Figur 2). Die Figur 4 zeigt eine Ansicht von vorne auf den Grundkörper 1.

Aus der Zusammenschau der Figuren 2 bis 4 wird deutlich, dass der Grundkörper 1 im vorderen Bereich 106 einen Vorsprung 110 aufweist, der einen im Wesentlichen rechteckigen Querschnitt hat. Der Vorsprung 110 ist in seinen Hauptabmessungen kleiner als ein Außendurchmesser des Grundkörpers 1 im hinteren Bereich 108. Der Grundkörper 1 ist im hinteren Bereich rohrförmig ausgebildet. Ein Innendurchmesser 112 des Grundkörpers 1 im hinteren Bereich 108 ist deutlich größer als die Höhe des rechteckigen Vorsprungs 110 (siehe Fig. 2).

Am Übergang zwischen dem vorderen Bereich 106 und dem hinteren Bereich 108 sind zwei Durchbrüche 118 in dem Grundkörper 1 ausgebildet, die einerseits von dem Vorsprung 110 und andererseits vom zylindrischen Innendurchmesser 112 des Grundkörpers 1 im hinteren Bereich 108 begrenzt werden. Die Durchbrüche 118 sind relativ groß bezogen auf die Späne, welche die Schneidplatten des erfindungsgemäßen Bohrkopfs 100 erzeugen. Dadurch gelangen die beim Auskesseln erzeugten Späne und der Kühlschmierstoff störungsfrei vom vorderen Bereich 106 durch die Durchbrüche 118 in das Innere des erfindungsgemäßen Bohrkopfs 100. Dort erfolgt die weitere Spanabfuhr über das Bohrrohr 2.

Die Späne werden nach dem Entstehen vom Kühlschmierstoff mitgenommen, der außen zwischen Bohrung und Grundkörper zugeführt wird. Kühlschmierstoff und Späne werden im Inneren des Grundkörpers abgeführt, was durch die Pfeile in Figur 1 veranschaulicht wird. Dadurch wird das Verklemmen von Spänen zwischen den Führungs- und Dämpfungsleisten und der zu bearbeitenden Führungsbohrung wirkungsvoll und effektiv vermieden.

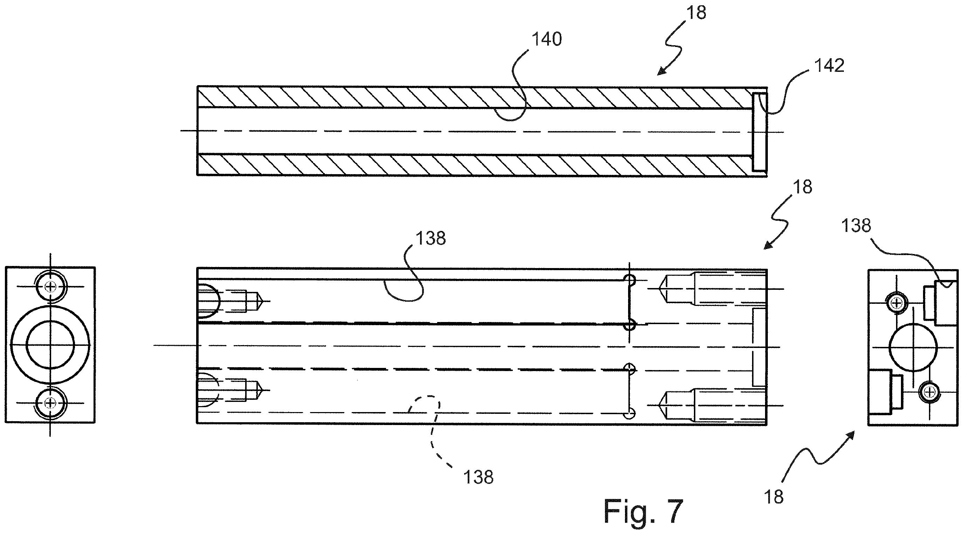

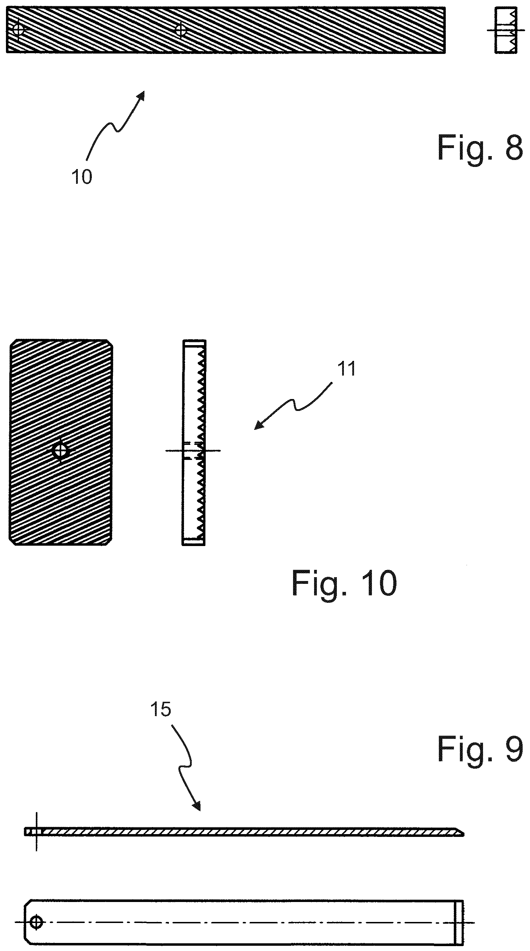

In dem Vorsprung 110 sind mehrere Ausnehmungen vorhanden, die Teil von verschiedenen Linearführungen sind. Eine dritte Ausnehmung 120 verläuft koaxial zu einer Mittelachse des Grundkörpers 1. Sie erstreckt sich über den gesamten vorderen Bereich. D.h. nach vorne (links in den Figuren 2 und 3) erreicht die dritte Ausnehmung 120 das vordere Ende des Vorsprungs 110. Die dritte Ausnehmung 120 hat auch eine Verbindung zum Inneren des Grundkörpers 1 im hinteren Bereich 108. Wie man aus der Zusammenschau der Figuren 2 bis 4 erkennen kann, hat die dritte Ausnehmung 120 im Querschnitt die Form eines Rechtecks, wobei an den beiden Längsseiten des Rechtecks jeweils noch eine Nut 122, die ebenfalls einen rechteckigen Querschnitt aufweist, ausgespart ist (siehe Figur 4). In der dritten Ausnehmung 120 wird der Zentralschieber 18 (siehe Figur 7) axial verschiebbar geführt. In den Nuten 122 wird jeweils eine lange Zahnplatte (siehe Figur 8) aufgenommen. Die Details dieser Führung werden weiter unten noch erläutert.

Wie sich aus den Figuren 2 und 4 ergibt, ist der Vorsprung 110 symmetrisch bezüglich einer Mittelebene 124 aufgebaut, die in der Figur 4 als strichpunktierte Linie dargestellt ist. Diese Symmetrie entsteht dadurch, dass oberhalb der Mittelebene 124 ein erster Schneidplattenhalter und unterhalb der Mittelebene ein zweiter Schneidplattenhalter angeordnet werden, die beide radial nach außen zustellbar sind. Der erste Schneidplattenhalter und der zweite Schneidplattenhalter sind jedoch um 180° zueinander versetzt angeordnet, so dass es sich bei dem erfindungsgemäßen Bohrkopf 100 um ein Werkzeug mit zwei Schneiden handelt, die einander gegenüberliegend angeordnet sind. Dadurch werden die Radialkräfte beim Zerspanen nahezu vollständig eliminiert und bei gleichem Spanvolumen werden die Spandicken halbiert.

Wie sich aus der Figur 2 ergibt, ist oberhalb der Mittelachse eine zweite Ausnehmung 126 und parallel dazu eine erste Ausnehmung 128 vorhanden. In entsprechender Weise sind unterhalb der Mittelachse ebenfalls eine zweite Ausnehmung 126 und eine erste Ausnehmung 128 angeordnet.

Aus Gründen der Übersichtlichkeit sind diese Ausnehmungen in der Figur 2 nicht mit Bezugszeichen versehen.

In der Figur 3 ist gut zu erkennen, dass die zweiten Ausnehmungen 126 und die ersten Ausnehmungen 128 parallel zueinander verlaufen. Des Weiteren ist gut zu erkennen, dass die Längsachsen der Ausnehmungen 126 und 128 senkrecht/orthogonal zur Längs- oder Drehachse des Grundkörpers 100 verlaufen.

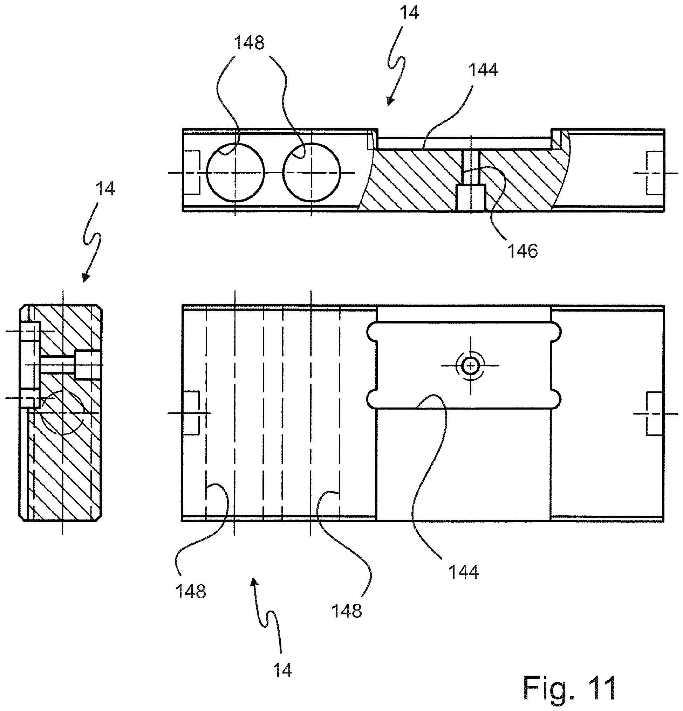

In die zweiten Ausnehmungen 126 wird jeweils ein Schleppschieber 14 (siehe Figur 11) eingesetzt, während in den ersten Ausnehmungen 128 jeweils ein Schneidenschieber 12, 13 eingesetzt wird. Die Bewegung eines Schleppschiebers 14, der in der zweiten Ausnehmung 126 geführt wird, und des zugehörigen Schneidenschiebers 12, 13, der in der ersten Ausnehmung 128 geführt wird, sind miteinander gekoppelt.

Dies erfolgt über Stifte 30, die jeweils einen Schleppschieber 14 mit einem Schneidenschieber 12, 13 verbinden (nicht dargestellt in den Figuren 2 bis 4. Um diese Kopplung zu ermöglichen, sind in einem Steg 130, der die zweiten Ausnehmungen 126 und die ersten Ausnehmungen 128 voneinander abgrenzt, zwei Langlöcher 132 ausgebildet. Diese Langlöcher 132 sind in der Figur 4 gut zu erkennen. Auch hier zeigt sich wieder der zentralsymmetrische Aufbau des Bohrkopfs 100 im Bereich des Vorsprungs 110.

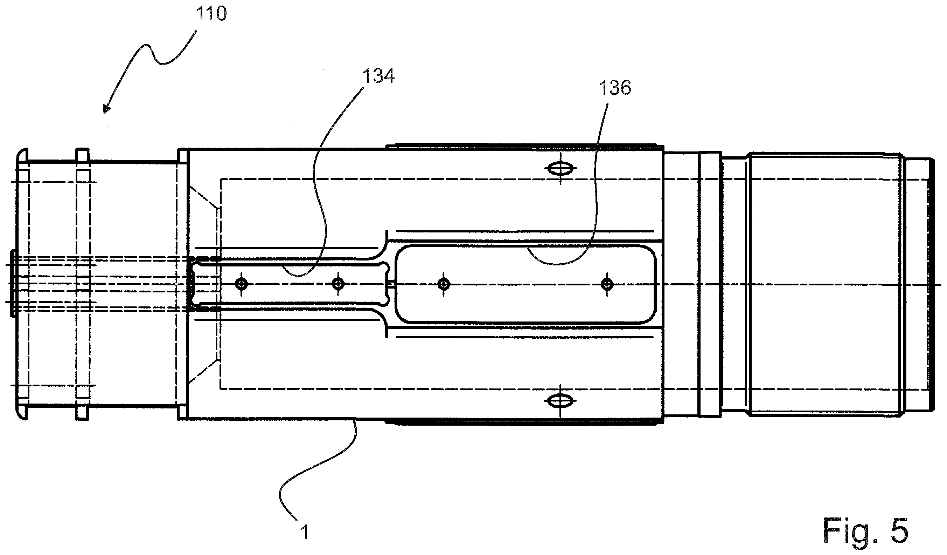

Die Figur 5 zeigt eine Seitenansicht des Grundkörpers 1 in der gleichen Blickrichtung wie in der Figur 3.

In der Figur 5 sind zwei Vertiefungen 134, 136 gut zu erkennen. In diesen Vertiefungen werden Führungsleisten 23 bzw. Dämpfungsleisten 24 aufgenommen.

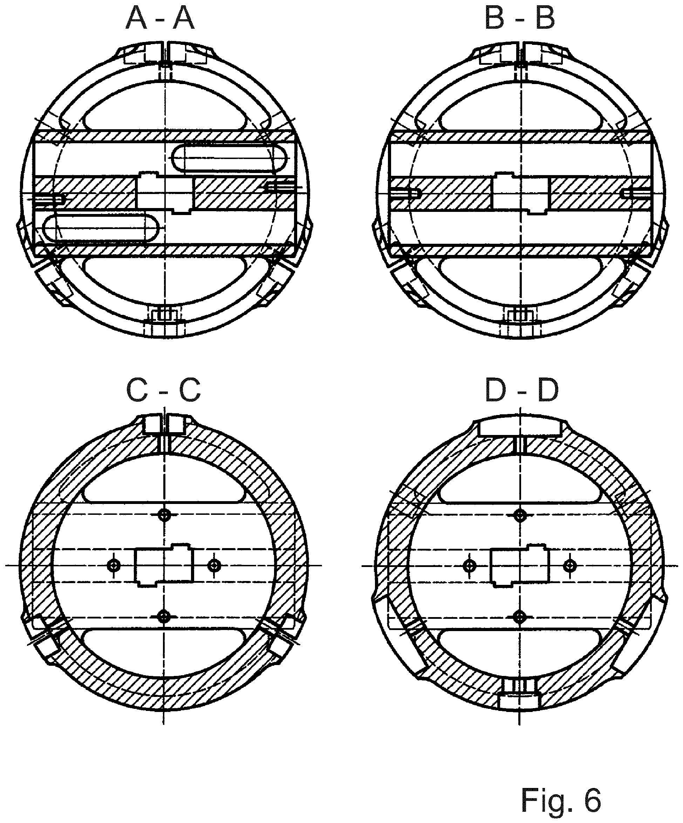

In der Figur 6 werden verschiedene Schnitte durch den Grundkörper 1 dargestellt. Die Schnittebenen ergeben sich aus der Figur 2. Um die Übersichtlichkeit nicht zu beeinträchtigen, sind in den Figuren 5 und 6 nicht alle Bezugszeichen eingetragen.

In der Figur 7 ist der Zentralschieber 18 in verschiedenen Ansichten und einem Längsschnitt dargestellt. Der Zentralschieber 18 hat einen rechteckigen Querschnitt. An einer Oberseite und einer Unterseite des Zentralschiebers 18 ist jeweils eine Tasche 138 ausgespart. Die Taschen 138 sind an einem Ende (links in der Figur 7) offen. In diesen Taschen 138 wird jeweils eine lange Zahnplatte (siehe Figur 8) aufgenommen.

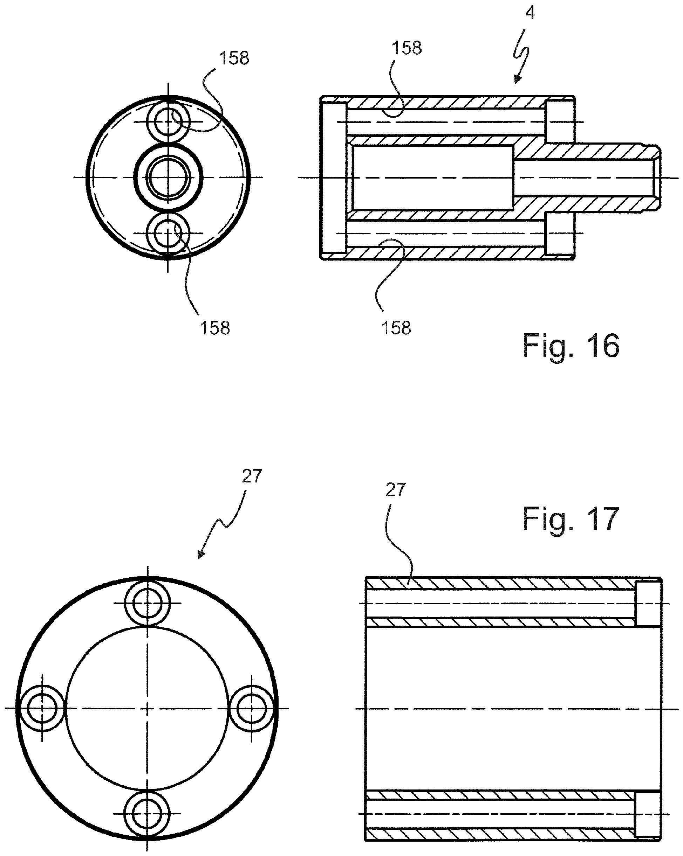

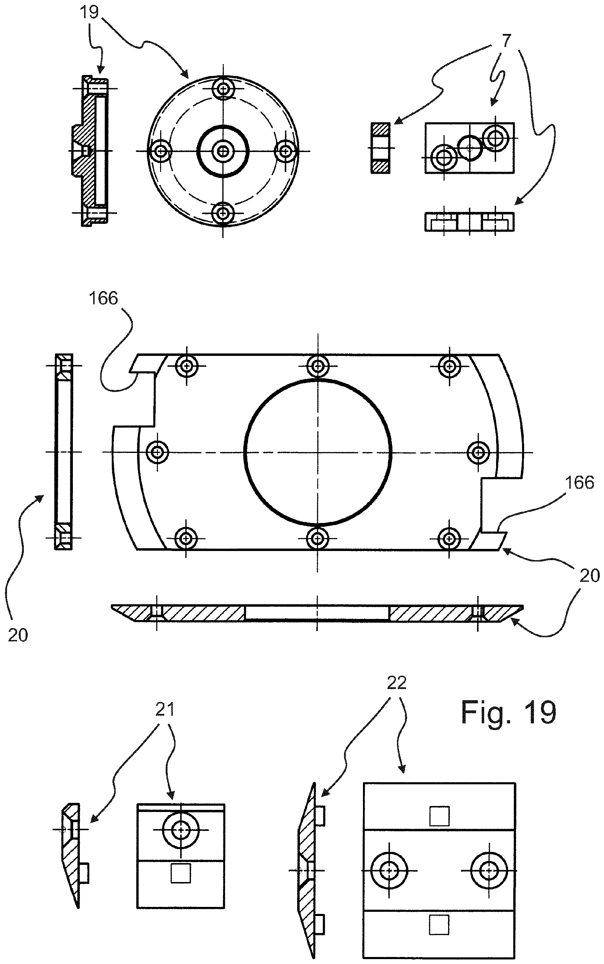

In dem Zentralschieber 18 ist eine Längsbohrung 140 mit einer Ansenkung 142 ausgebildet. Im Bereich der Ansenkung 142 wird der Zentralschieber 18 über die Zentrierhülse 26 und das Zwischenstück 8 mit dem Betätiger 4 (siehe Figur 16) verbunden. An der gegenüberliegenden Stirnseite, dort wo die Taschen 138 enden, sind ebenfalls zwei Gewindebohrungen (ohne Bezugszeichen) vorhanden. Mit deren Hilfe wird bei der Montage des Bohrkopfs 100 eine Stirnplatte 7 (siehe Figur 19) mit dem Zentralschieber 18 verbunden.

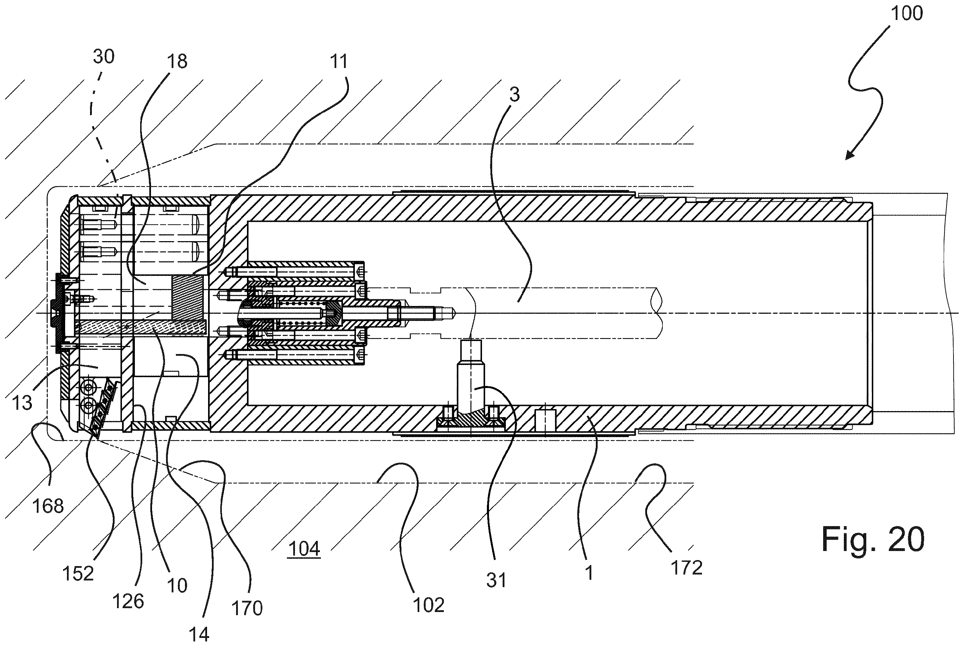

In der Figur 8 ist eine lange Zahnplatte 10 mit einer Schrägverzahnung dargestellt. Schrägverzahnung bedeutet im Zusammenhang mit der Erfindung, dass die Zähne der Verzahnung nicht parallel zu einer Bewegungsrichtung der Zahnplatten in dem Bohrkopf verlaufen. In den Figuren 20 bis 22 ist die Ausrichtung der Zähne durch eine strichpunktierte Linie ohne Bezugszeichen dargestellt. Zu der Zahnplatte 10 gehört auch eine Abstimmplatte 15, wie sie in der Figur 9 dargestellt ist. Diese Abstimmplatte 15 wird zwischen der Zahnplatte 10 und dem Zentralschieber 18 in die Tasche 138 eingelegt. Sie erleichtert bzw. ermöglicht die Montierbarkeit des erfindungsgemäßen Bohrkopfs 100; sie dient aber auch dazu, das Zahnflankenspiel zwischen einer Schrägverzahnung der langen Zahnplatte 10 und einer damit zusammenwirkenden, querlaufenden Zahnplatte 11 (siehe Figur 10) einstellen zu können. In der Praxis hat man bei der Montage des Bohrkopfs Abstimmplatten 15 in verschiedenen Dicken zur Verfügung und kann, je nach den Toleranzlagen der zu fügenden Bauteile, diese Toleranzen durch unterschiedliche Dicken der Abstimmplatten 15 kompensieren.

Die Dicke der Abstimmplatten 15 ist in der Regel größer als die Tiefe der Verzahnung zwischen der langen Zahnplatte 10 und der quer laufenden Zahnplatte 11. Wenn also der Bohrkopf montiert werden soll, ist es möglich, die lange Zahnplatte ohne Abstimmplatte so weit in der Tasche 138 zu versenken, dass sie nicht mehr über die Oberseite des Zentralschiebers 18 hinausragt. Dann ist es möglich, den Zentralschieber an die gewünschte Position zu bringen. Anschließend wird von der Stirnseite des Zentralschiebers die Abstimmplatte 15 in die Tasche geschoben und auf diese Weise die lange Zahnplatte 10 "angehoben". Dadurch wird ein Eingriff zwischen den Verzahnungen der langen Zahnplatte 10 und der querlaufenden Zahnplatte 11 erreicht.

In der Figur 11 ist der Schleppschieber 14 in verschiedenen Ansichten dargestellt. Der Schleppschieber 14 hat einen rechteckigen Querschnitt.

An einer Seite des Schleppschiebers 14 ist eine vierte Ausnehmung 144 ausgespart. In die vierte Ausnehmung 144 mündet eine Stufenbohrung 146. In diese Stufenbohrung 146 wird eine Schraube (nicht dargestellt) eingedreht, die über ein Gewinde in der quer laufenden Zahnplatte 11 die Zahnplatte 11 fest in der vierten Ausnehmung 144 fixiert. Wie aus der Seitenansicht und der Draufsicht der Figur 11 gut zu erkennen ist, ist die vierte Ausnehmung 144 und mit ihr die quer laufende Zahnplatte 11 etwas versetzt zur Mitte des Schleppschiebers 14 angeordnet. In montiertem Zustand befindet sich die Zahnplatte 11 bzw. die vierte Ausnehmung 144 des Schleppschiebers 14 im Bereich der Mittelachse des Bohrkopfs 100. In montiertem Zustand ist der Schleppschieber 14 zu beiden Seiten der vierten Ausnehmung 144 in der ersten Ausnehmung 126 gut geführt (siehe Figur 20).

In der Figur 11 sind links von der ersten Ausnehmung 144 zwei Bohrungen 148 angeordnet. In den Bohrungen 148 werden die oben bereits erwähnten Mitnehmerstifte 30 (nicht dargestellt) eingepresst.

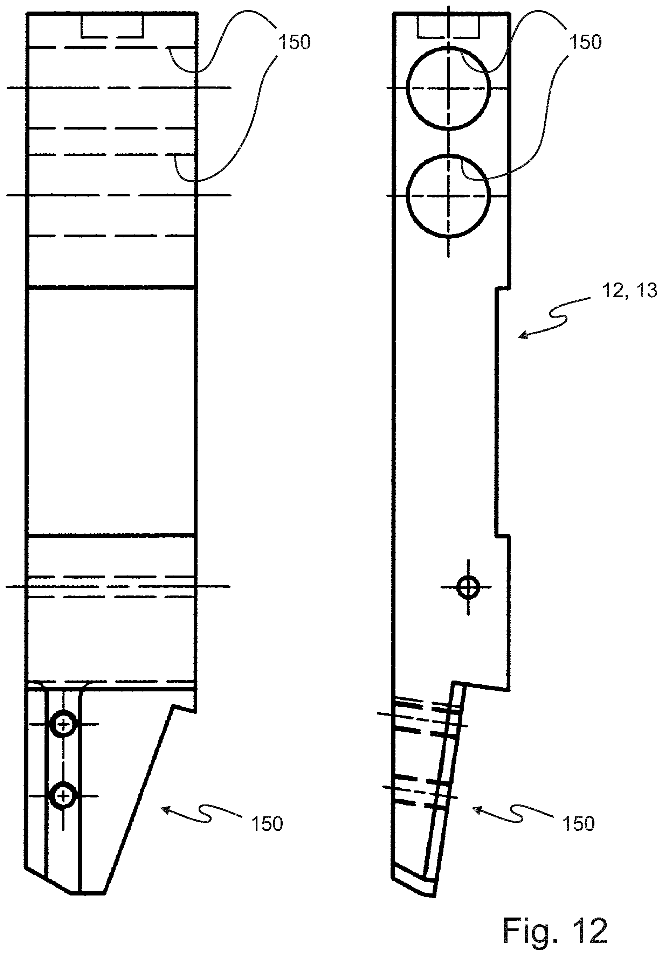

In der Figur 12 sind die Schneidenschieber 12, 13 in zwei Ansichten dargestellt. Die Schneidenschieber 12, 13 haben ebenfalls einen rechteckigen Querschnitt. An dem in Figur 12 oberen Ende sind Bohrungen 150 angeordnet, die hinsichtlich ihrer Lage und ihres Abstands so angeordnet sind, dass sie mit den Bohrungen 148 im Schleppschieber 14 korrespondieren. In anderen Worten: Es ist möglich, einen Schleppschieber 14 und einen Schneidenschieber 12 oder 13 mit Hilfe von eingepressten Mitnehmerstiften 30 fest miteinander zu verbinden.

Die Schneidenschieber 12, 13 werden in den ersten Ausnehmungen 128 in dem Vorsprung 110 geführt. Wie bereits erläutert, ist zwischen den zweiten Ausnehmungen 126 und den ersten

Ausnehmungen 128 in dem Vorsprung 110 ein Steg 130 ausgebildet. Dies bedeutet, dass im montierten Zustand der Schleppschieber 14 und der zugehörige Schneidenschieber 12 oder 13 einen gewissen Abstand zueinander haben. Dieser Abstand wird durch die Mitnehmerstifte 30 überbrückt. Die Mitnehmerstifte 30 ragen durch das Langloch 132 in dem Steg 130 und überbücken dadurch den Abstand von Schleppschieber 14 und Schneidenschieber 12, 13, der durch den Steg 130 verursacht ist.

Das Langloch 132 ist so bemessen, dass eine ausreichende radiale Zustellung des Schneidenschiebers 12, 13 möglich ist.

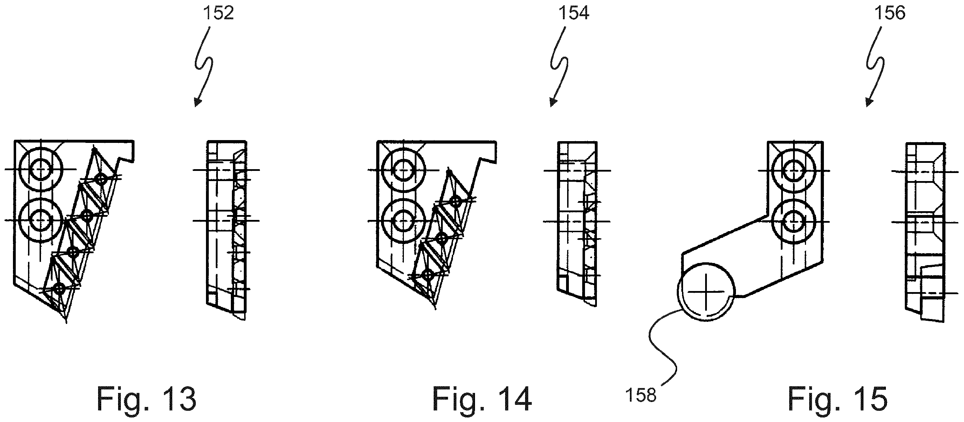

An dem in Figur 12 unteren Ende der Schneidenschieber 12, 13 ist eine Schneidplattenaufnahme 150 ausgebildet. Die Schneidplattenaufnahme weist eine Auflagefläche und zwei Gewindebohrungen (jeweils ohne Bezugszeichen) auf. Mit Hilfe der Auflagefläche und der Gewindebohrungen können verschiedene Schneidplattenhalter 16, 17 oder 28, wie sie in den Figuren 13 bis 15 dargestellt sind, an den Schneidenschiebern 12, 13 befestigt werden.

Selbstverständlich ist die Erfindung nicht auf die exemplarisch dargestellten Schneidplattenhalter 152, 154 und 156 beschränkt.

In die Schneidplattenhalter 152 und 154 werden vier bzw. drei Schneidplatten eingesetzt. Die Verwendung einer Mehrzahl von relativ kleinen Schneidplatten hat den Vorteil, dass schmale Späne entstehen.

Der Schneidplattenhalter 156 ist gekröpft ausgebildet, so dass die eigentliche Schneide 158 in axialer Richtung über das Ende des Grundkörpers 1 bzw. des Vorsprungs 110 hinausragt. Dadurch ist es möglich, die in der Figur 1 dargestellte Sacklochbohrung mit einem ebenen Ende herzustellen.

In der Figur 16 ist der Betätiger 4 in einem Längsschnitt und einer Vorderansicht dargestellt. Daraus wird deutlich, dass der Betätiger 4 bei diesem Ausführungsbeispiel eine zylindrische Außenkontur hat.

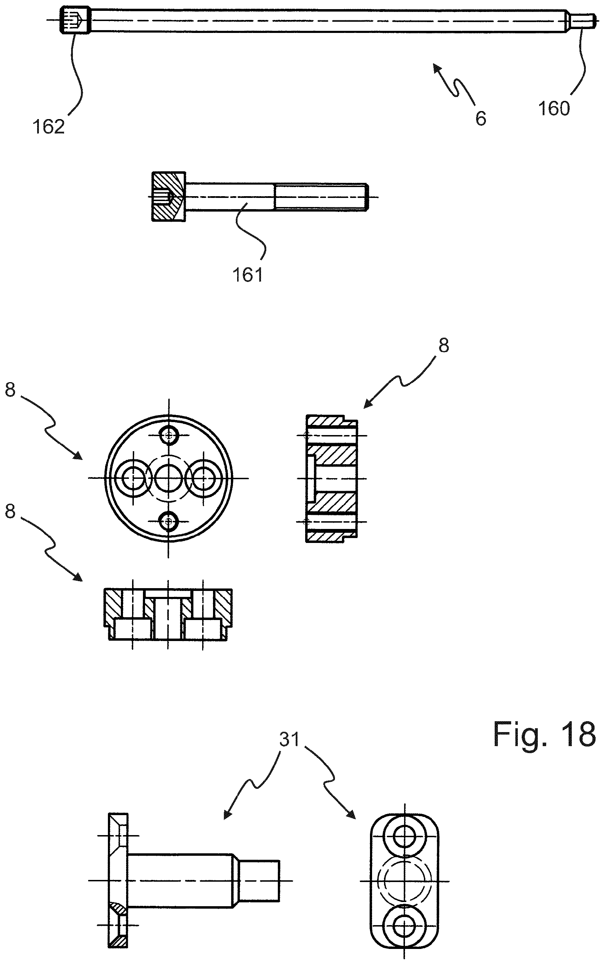

Der Betätiger 4 weist überdies zwei Stufenbohrungen 158 auf. In diese Stufenbohrungen 158 werden Schrauben eingeführt und in die Innengewinde eines Zwischenstücks 8 (siehe Figur 18) eingedreht. Das Zwischenstück 8 wird unter Verwendung einer Passhülse 26 und zweier Schrauben an der Stirnseite des Zentralschiebers 18 mit diesem verbunden; auf diese Weise werden Betätiger 4 und Zentralschieber 18 miteinander verbunden. Durch die Verwendung des Zwischenstücks 8 wird die Montage des Bohrkopfs erleichtert (siehe Figur 1).

Der Betätiger 4 wiederum ist in einer Hülse 27 geführt. Die Hülse 27 ist letztendlich ein dickwandiges Rohr, dessen Innendurchmesser dem Außendurchmesser des Betätigers 4 entspricht. Dadurch wird sichergestellt, dass Späne, die sich im Inneren des Grundkörpers 1 befinden, nicht in das Innere des Vorsprungs 110 gelangen können. Die Länge der Hülse 27 ist größer als der Verstellweg des Betätigers 4. Wie sich aus der Figur 1 ergibt, wird der Betätiger 4 mit der Steuerstange 3 über eine zentral angeordnete Schraube 161 verbunden. Zwischen der Schraube 161 und dem Zwischenstück 8 ist eine Druckfeder (ohne Bezugszeichen; siehe Figur 1) vorgesehen, die dafür sorgt, dass die Schraube 161 in Richtung der Steuerstange 3 gedrückt wird.

Um sicherzustellen, dass sich die Schraube 161 während des Betriebs nicht lösen kann, ist ein sehr langer Gewindestift 6 vorgesehen. Dieser Gewindestift 6 ist in Figur 18 dargestellt. Er hat in Figur 18 in seinem rechten Ende einen Zapfen 160, der in den Innensechskant der Schraube 161 ragt und an dem gegenüberliegenden Ende einen Gewindeabschnitt 162 aufweist. Der Gewindeabschnitt 162 wirkt mit einem Innengewinde 164 der Stirnplatte 7 (siehe Figur 19) zusammen. Die Stirnplatte 7 wiederum ist mit dem Zentralschieber 18 verschraubt. Sobald die Stirnplatte 7 mit dem Zentralschieber 18 verschraubt ist, sind die Taschen 138 im Zentralschieber 18 am vorderen Ende verschlossen und die langen Zahnplatten 10 in axialer Richtung gegen Verschieben gesichert.

Am vorderen Ende des erfindungsgemäßen Bohrkopfs 100 ist dieser durch eine Zentrierplatte 19 und eine vordere Abdeckplatte 20 abgeschlossen, so dass keine Späne in das Innere des Vorsprungs 110 gelangen können. Die vordere Abdeckplatte 20 ist ebenfalls in der Figur 19 dargestellt.

Der Außendurchmesser der Zentrierplatte 19 entspricht dem Durchmesser einer Zentralbohrung in der vorderen Abdeckplatte 20. Die Zentrierplatte 19 besitzt eine Zentrierbohrung zur Aufnahme des Bohrkopfes auf einer Dreh- oder Schleifmaschine wenn z.B. die Dämpfungsleisten nachgearbeitet werden.

In der vorderen Abdeckplatte 20 sind Ausnehmungen 166 vorhanden. Sie erlauben das Einfahren der Schneidenschieber 12, 13, insbesondere dann, wenn der gekröpfte Schneidplattenhalter 156 montiert wurde.

In der Figur 19 sind auch Abdeckungen 21 und 22 dargestellt. Die Abdeckungen 21 und 22 dienen dazu, die zweiten Ausnehmungen 126 und die ersten Ausnehmungen 128 im Vorsprung 110 zu verschließen.

Nachdem nun die Einzelteile des erfindungsgemäßen Bohrkopfs im Detail erläutert wurden, wird nun dessen Funktionsweise beschrieben.

Über die Steuerstange 3 bzw. den Betätiger 4 und das Zwischenstück 8 ist es möglich, während des Betriebs des Bohrkopfs den Zentralschieber 18 in axialer Richtung relativ zu dem Grundkörper 1 zu verschieben. Die an dem Zentralschieber 18 angebrachten langen Zahnplatten 10 kämmen mit den querlaufenden Zahnplatten 11 der beiden in den zweiten Ausnehmungen 126 geführten Schleppschieber 14. Wegen der aus jeweils einer langen Zahnplatten 10 und einer querlaufenden Zahnplatten 11 gebildeten Schrägverzahnung führt jede Bewegung des Zentralschiebers 18 in der dritten

Ausnehmung 120 dazu, dass sich die beiden Schleppschieber 14 radial nach außen bzw. nach innen bewegen. Über die Mitnehmerstifte 30 ist je ein Schneidenschieber 12, 13 mit je einem Schleppschieber 14 gekoppelt, so dass die Relativbewegungen der Steuerstange 3 in entsprechende Zustellbewegungen der Schneidenschieber 12, 13 umgesetzt werden.

Dadurch ist es möglich, während des Betriebs des Bohrkopfs 100 die Schneidenschieber 12, 13 und die daran befestigten Schneidplattenhalter 152, 154 und 156 radial zuzustellen, so dass gewünschte Konturen in dem Werkstück 104 ausgekesselt werden können.

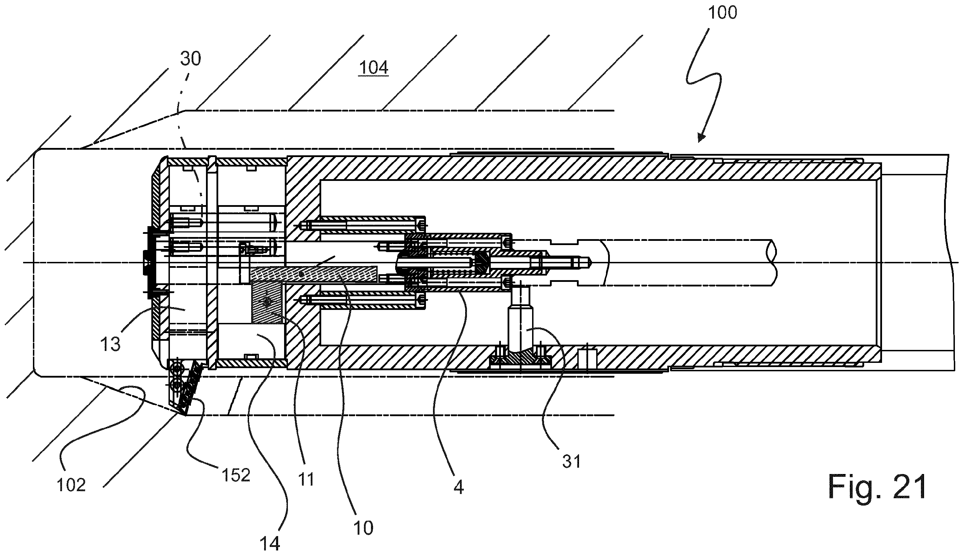

Die Funktionsweise ist aus dem Vergleich der Figuren 20 und 21 nachvollziehbar.

In den Figuren 20 und 21 ist der Bohrkopf 100 mit montiertem Schneidplattenhalter 152 dargestellt. In der Figur 20 ist der Schneidplattenhalter 152 ganz eingefahren. D.h. die äußerste Spitze des Schneidplattenhalters 152 bzw. der darauf angeordneten Schneidplatte 29 ragt in radialer Richtung nicht über den Durchmesser des Grundkörpers 1 bzw. der Führungsleisten 23 und der Dämpfungsleisten 24 hinaus. Um diesen minimalen Durchmesser anzufahren, wird die Steuerstange 3 in der Figur 20 ganz nach links, d.h. in Richtung des Vorsprungs 110, bewegt. Infolgedessen berührt der Zentralschieber 18 die vordere Abdeckplatte 20 fast. Die lange Zahnplatte 10 und die quer laufende Zahnplatte 11 sind in der Figur 20 ebenfalls dargestellt. Durch diese Stellung des Zentralschiebers 18 ist der sichtbare Schleppschieber 14 in der Figur 20 ganz nach oben gewandert. Die Kopplung von Schleppschieber 14 und Schneidenschieber 13, bzw. 12 über die Mitnehmerstifte 30 bewirkt, dass der Schneidenschieber 13 ganz eingefahren ist, wie in Figur 20 dargestellt. Der Schneidenschieber 12 ist in den Figuren 20 ff nicht sichtbar; für ihn gilt das Gleiche. In dieser Stellung hat die Schneide des oder der Schneidplattenhalter den kleinstmöglichen Abstand zur Drehachse des Bohrkopfs.

In der Figur 21 ist nun die andere Extremsituation dargestellt, in welcher der Schneidenschieber 12 ganz ausgefahren ist, so dass der erfindungsgemäße Bohrkopf 100 den größtmöglichen Bearbeitungsdurchmesser hat. Dies wird dadurch erreicht, dass der Zentralschieber 18 von der Steuerstange 3 in Figur 21 relativ zu dem Grundkörper 1 so weit nach rechts bewegt wurde, dass der Betätiger 4 an dem Endanschlag 31 anliegt.

Aufgrund der Schrägverzahnung an der langen Zahnplatte 10 und der querlaufenden Zahnplatte 11 hat sich der Schleppschieber 14 in der Figur 21 nach unten bewegt und infolgedessen ist der mit dem Schleppschieber 14 gekoppelte Schneidenschieber 12 voll ausgefahren.

Zwischen diesen beiden Extrempositionen sind alle Zwischenstellungen möglich, so dass durch eine gesteuerte Überlagerung von Vorschubbewegung und Zustellbewegung nahezu beliebige komplexe nicht-zylindrische Innenkonturen mit dem erfindungsgemäßen Bohrkopf 100 hergestellt werden können.

In den Figuren 20 und 21 ist die Kontur der Bohrung 102, die mit dem Schneidplattenhalter 152 oder 154 (siehe Figur 13 und 14) hergestellt werden kann, dargestellt. Am Ende der Bohrung 102 ist ein zylindrischer Abschnitt 168 vorhanden, welcher dem Durchmesser der Führungsbohrung entspricht, die zur Führung des Bohrkopfs 100 durch die Führungsleisten 23 und die Dämpfungsleisten 24 in das Werkstück 104 eingebracht wurde. Danach beginnt ein kegelstumpfförmiger Abschnitt 170, der in einen zylindrischen Abschnitt 172 übergeht. Der kegelstumpfförmige Abschnitt 170 und die Durchmessererweiterung im Bereich 172 können mit Hilfe des erfindungsgemäßen Bohrkopfs 100 unter Verwendung der Schneidplattenhalter 152 oder 154 hergestellt werden. Mit den Schneidplattenhaltern 152 oder 154 erreicht man das Ende der Bohrung jedoch nicht.

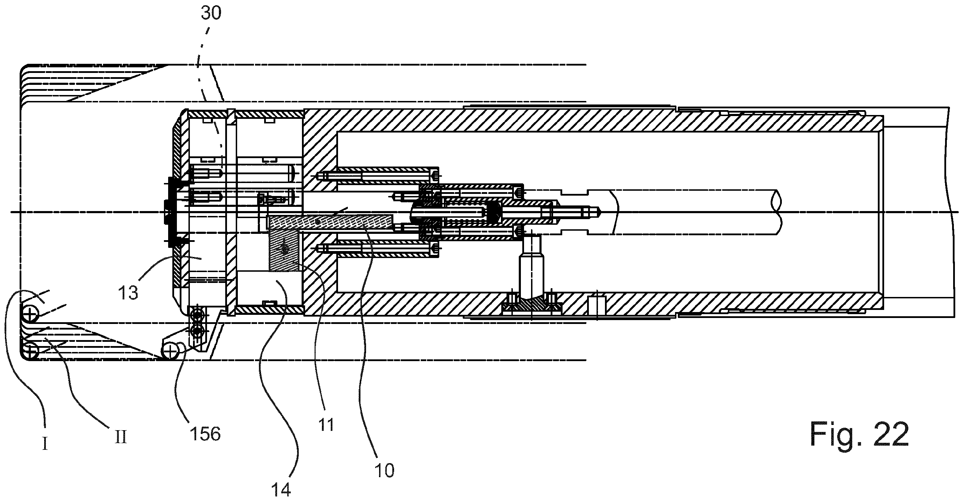

Wenn beispielsweise das stirnseitige Ende der Sacklochbohrung auskesselt werden soll, so dass es den gleichen Durchmesser hat wie der Abschnitt 172, dann wird der gekröpfte Schneidplattenhalter 156 (siehe Figur 15) eingesetzt, wie dies in der Figur 22 dargestellt ist. Zunächst wird nur der kegelstumpfförmige Abschnitt 170 mit Hilfe der Schneidplattenhalter 152 und 154 hergestellt, damit noch genügend Führungslänge übrig ist. Die Kröpfung des Schneidplattenhalters 156 ist so bemessen, dass die Schneidplatte des Schneidplattenhalters in axialer Richtung über das (vordere) Ende des Vorsprungs 110, insbesondere auch über die Zentrierplatte 19 und die vordere Abdeckplatte 20 hinausragt. Um die Bohrung im Bereich des Abschnitts 168 auf den Durchmesser des Bohrungsabschnitts 172 zu bringen, wird zunächst der Schneidenschieber 156 ganz eingefahren, so dass der Schneidplattenhalter 156 und die darauf befestigte Schneidplatte in radialer Richtung nicht über die Führungsleiste 23 und die Dämpfungsleiste 24 hinausragen. In diesem Zustand ist es möglich, mit dem Schneidplattenhalter bzw. dem gesamten Bohrkopf so weit in der Sacklochbohrung nach links zu fahren, bis der Schneidplattenhalter bzw. die Schneide am Grund der Sacklochbohrung anliegt. Diese Stellung des Schneidplattenhalters 156 ist in der Figur 22 mit I angedeutet. Aus Gründen der Übersichtlichkeit ist der zugehörige Bohrkopf 100 nicht dargestellt. In dieser Position wird nun der Bohrkopf 100 in Rotation versetzt und es erfolgt eine Zustellung von beispielsweise 1,5 mm oder 3mm, so dass die Schneide in den zylindrischen Abschnitt 168 der Führungsbohrung eindringt. Anschließend der rotierende
der Bohrkopf 100 relativ zu dem Werkstück bewegt (nach rechts in der Figur 22) und ein Teil des zylindrischen Abschnitts 168 abgetragen. Sobald die Schneidplatte den kegelstumpfförmigen Abschnitt 170 erreicht hat, wird die Vorschubbewegung beendet. Der Bohrkopf fährt wieder (nach links in Figur 22) bis an das Ende der Sacklochbohrung. Dort wird erneut der Schneidplattenhalter bzw. die Schneidplatte zugestellt und der Bohrkopf 100 in der Figur 22 nach rechts aus dem zylindrischen Abschnitt 168 herausgefahren. Dieser Vorgang kann so lange wiederholt werden, bis der Schneidplattenhalter 156 bzw. die darauf befestigte Schneidplatte den Durchmesser des zylindrischen Abschnitts 172 erreicht hat. Diese Position des Schneidplattenhalters 156 ist in der Figur 22 mit dem Bezugszeichen II bezeichnet. Die dazwischen liegenden verschiedenen Zustellbewegungen und Vorschubbewegungen sind durch mehrere parallele Linien (ohne Bezugszeichen) angedeutet. Zum Schluss kann auch mit einem kleinen Schlichtspan der Boden der Sackloch-Bohrung egalisiert werden. Die Vorschubbewegung muss beendet sein bevor die Schneide 156 auf die durch die Vorarbeit (Herstellen des kegelstumpfförmigen Abschnitts 170) entstandene Stufe trifft.

Am Ende ist die Sacklochbohrung 102 mit einem Durchmesser entsprechen dem zylindrischen Abschnitt 172 bis an den Grund der Sacklochbohrung zylindrisch. Dies ist eine Kontur der Sacklochbohrung, die mit herkömmlichen Bohrköpfen nicht realisierbar war.

Wenn man sich vor Augen hält, dass, wie durch das Bezugszeichen I angedeutet, der gekröpfte Schneidplattenhalter 156 sehr weit eingefahren werden muss, um in den zylindrischen Abschnitt 168 einfahren zu können, wird die Funktion der Aussparungen 166 in der vorderen Abdeckplatte 20 (siehe Figur 19) deutlich. Die Aussparungen dienen dazu, den gekröpften Teil des Schneidplattenhalters 156 aufzunehmen bzw. dessen Zustellbewegung radial nach innen zu erlauben.

Wenn der gerade Boden hergestellt ist, wird der Schneidplattenhalter 156 eingefahren und der Bohrkopf aus der Führungsbohrung ausgefahren. Die Schneidplattenhalter 152 und 154 werden montiert. Der rotierende Bohrkopf wird bis an die soeben hergestellte Kontur eingefahren. Die Schneidplatten werden ausgefahren und können nun die restliche Kontur ohne Zwischenstopp herstellen.

## Patentansprüche

1. Bohrkopf (100) umfassend einen Grundkörper (1) mit einem hinteren Ende und einem dem vorderen Ende, wobei der Grundkörper (1) an dem hinteren Ende eine mechanische Schnittstelle zur Verbindung mit einem Bohrrohr (2) aufweist und an dem vorderen Ende einen sich in axialer Richtung erstreckenden Vorsprung (110) aufweist,
wobei in dem Vorsprung (110) ein in axialer Richtung verschiebbarer Zentralschieber (18) geführt ist, wobei in dem Vorsprung (110) mindestens eine in radialer Richtung verlaufende erste Ausnehmung (128) ausgebildet ist,
wobei in jeder ersten Ausnehmung (128) ein Schneidenschieber (12, 13) geführt ist,
wobei der Zentralschieber (18) und der mindestens eine Schneidenschieber (12, 13) derart miteinander gekoppelt sind, dass eine Relativbewegung zwischen Zentralschieber (18) und dem Grundkörper (1) eine radiale Zustell-Bewegung des oder der Schneidenschieber (12, 13) bewirkt,
**dadurch gekennzeichnet, dass**
in dem Vorsprung (110) mindestens eine in radialer Richtung und parallel zu der mindestens einen ersten Ausnehmung (128) verlaufende zweite Ausnehmung (126) ausgebildet ist,
dass in der oder den zweiten Ausnehmungen (126) jeweils ein Schleppschieber (14) geführt ist, und dass jeweils
ein Schneidenschieber (12, 13) und ein Schleppschieber (14) derart miteinander gekoppelt sind, dass Zustellbewegungen des Schleppschiebers (14) auf den mit ihm gekoppelten Schneidenschieber (12, 13) übertragen werden.

2. Bohrkopf nach Anspruch 1, **dadurch gekennzeichnet, dass** an dem oder den Schneidenschiebern (12, 13) ein gerader oder ein gekröpfter Schneidplattenhalter (156) angeordnet ist.

3. Bohrkopf nach Anspruch 2, **dadurch gekennzeichnet, dass** der Vorsprung (110) an seinem stirnseitigen Ende mindestens eine Ausnehmung (166) für einen gekröpften Schneidplattenhalter (156) aufweist.

4. Bohrkopf nach einem der vorhergehenden Ansprüche **dadurch gekennzeichnet, dass** jeweils ein Schneidenschieber (12, 13) und ein Schleppschieber (14) durch einen oder mehrere Mitnahmestifte (30) miteinander verbunden sind.

5. Bohrkopf nach einem der vorhergehenden Ansprüche, **dadurch gekennzeichnet, dass** eine Relativbewegung zwischen Zentralschieber (18) und dem Grundkörper (1) mittels einer Schrägverzahnung in eine radiale Zustell-Bewegung des oder der Schneidenschieber (12, 13) umgesetzt wird.

6. Bohrkopf nach Anspruch 5, **dadurch gekennzeichnet, dass** an dem Zentralschieber (18) mindestens eine Zahnplatte (10) und an dem oder den Schleppschiebern (14) jeweils eine weitere Zahnplatte (11) angeordnet ist.

7. Bohrkopf nach einem der vorhergehenden Ansprüche, **dadurch gekennzeichnet, dass** am Übergang zwischen Grundkörper (1) und Vorsprung (110) mindestens ein Durchbruch (118) vorhanden ist.

8. Bohrkopf nach einem der vorhergehenden Ansprüche, **dadurch gekennzeichnet, dass** am Übergang zwischen Grundkörper (1) und Vorsprung (110) eine Abstreifhülse (27) vorhanden ist, und dass ein zwischen Steuerstange (3) und Zentralschieber (18) angeordneter Betätiger (4) von der Abstreifhülse (27) umgeben ist.

9. Bohrkopf nach einem der vorhergehenden Ansprüche, **dadurch gekennzeichnet, dass** in dem Zentralschieber (18) mindestens eine Tasche (138) zur Aufnahme einer Zahnplatte (10) und einer Abstimmplatte (15) vorgesehen ist.

10. Bohrkopf nach einem der vorhergehenden Ansprüche, **dadurch gekennzeichnet, dass** der Vorsprung (110) an seinem stirnseitigen Ende eine vordere Abdeckplatte (20) und eine Zentrierplatte (19) aufweist.

11. Bohrkopf nach einem der vorhergehenden Ansprüche, **dadurch gekennzeichnet, dass** die mindestens eine zweite Ausnehmung (126) und die mindestens eine erste Ausnehmung (128) durch Abdeckplatten (21, 22) abgedeckt sind.

12. Bohrkopf nach einem der vorhergehenden Ansprüche, **dadurch gekennzeichnet, dass** der Schneidenschieber (12, 13) und der gerade oder gekröpfte Schneidplattenhalter (156) einstückig oder als getrennte Bauteile ausgeführt sind.

## Claims

1. Drill head (100) comprising a main body (1) having a rear end and a the front end, the main body (1) having, at the rear end, a mechanical interface for connection to a drill tube (2) and, at the front end, a projection (110) extending in the axial direction,
with a central slider (18) which can be displaced in the axial direction being guided in the projection (110),
at least one first recess (128) extending in the radial direction being formed in the projection (110),
with a cutting slider (12, 13) being guided in every first recess (128),
the central slider (18) and the at least one cutting slider (12, 13) being coupled to one another in such a way that a relative movement between the central slider (18) and the main body (1) causes a radial advancing movement of the cutting slider or sliders (12, 13),
**characterized in that**
at least one second recess (126) extending in the radial direction and in parallel with the at least one first recess (128) is formed in the projection (110),
**in that** a drag slider (14) is guided in the second recess or recesses (126) in each case, and **in that** in each case
a cutting slider (12, 13) and a drag slider (14) are coupled to one another in such a way that advancing movements of the drag slider (14) are transmitted to the cutting slider (12, 13) coupled thereto.

2. Drill head according to claim 1, **characterized in that** a straight or cranked cutting die holder (156) is arranged on the cutting slider or sliders (12, 13).

3. Drill head according to claim 2, **characterized in that** the projection (110) has, on its end face, at least one recess (166) for a cranked cutting die holder (156).

4. Drill head according to any of the preceding claims, **characterized in that** a cutting slider (12, 13) and a drag slider (14) in each case are interconnected by one or more driver pins (30).

5. Drill head according to any of the preceding claims, **characterized in that** a relative movement between the central slider (18) and the main body (1) is converted into a radial advancing movement of the cutting slider or sliders (12, 13) by means of helical teeth.

6. Drill head according to claim 5, **characterized in that** at least one toothed plate (10) is arranged on the central slider (18) and a further toothed plate (11) is arranged on each of the drag slider or sliders (14).

7. Drill head according to any of the preceding claims, **characterized in that** at least one opening (118) is provided at the transition between the main body (1) and the projection (110).

8. Drill head according to any of the preceding claims, **characterized in that** a stripping sleeve (27) is provided at the transition between the main body (1) and the projection (110), and **in that** an actuator (4) arranged between the control rod (3) and the central slider (18) is surrounded by the stripping sleeve (27).

9. Drill head according to any of the preceding claims, **characterized in that** at least one pocket (138) for receiving a toothed plate (10) and an adapter plate (15) is provided in the central slider (18).

10. Drill head according to any of the preceding claims, **characterized in that** the projection (110) has, on its end face, a front cover plate (20) and a centering plate (19).

11. Drill head according to any of the preceding claims, **characterized in that** the at least one second recess (126) and the at least one first recess (128) are covered by cover plates (21, 22).

12. Drill head according to any of the preceding claims, **characterized in that** the cutting slider (12, 13) and the straight or cranked cutting die holder (156) are designed in one piece or as separate components.

## Revendications

1. Tête de perçage (100) comprenant un corps de base (1) avec une extrémité arrière et une l'extrémité avant, dans laquelle le corps de base (1) présente sur l'extrémité arrière une interface mécanique à relier à un tube de perçage (2) et présente sur l'extrémité avant une partie saillante (110) s'étendant dans la direction axiale,
dans laquelle un coulisseau central (18) mobile dans la direction axiale est guidé dans la partie saillante (110),
dans laquelle au moins un premier évidement (128) s'étendant dans la direction radiale est réalisé dans la partie saillante (110),
dans laquelle un coulisseau de lame (12, 13) est guidé dans chaque premier évidement (128),
dans laquelle le coulisseau central (18) et le au moins un coulisseau de lame (12, 13) sont accouplés l'un à l'autre de telle sorte qu'un mouvement relatif entre le coulisseau central (18) et le corps de base (1) provoque un mouvement d'avance radial du ou des coulisseaux de lame (12, 13),
**caractérisée en ce que**
au moins un deuxième évidement (126) s'étendant dans la direction radiale et parallèlement à le au moins un premier évidement (128) est réalisé dans la partie saillante (110),
que respectivement un coulisseau d'entraînement (14) est guidé dans le ou les deuxièmes évidements (126), et que respectivement
un coulisseau de lame (12, 13) et un coulisseau d'entraînement (14) sont accouplés l'un à l'autre de telle sorte que les mouvements d'avance du coulisseau d'entraînement (14) sont transmis sur le coulisseau de lame (12, 13) accouplé à celui-ci.

2. Tête de perçage selon la revendication 1, **caractérisée en ce qu'**un support de plaquette de coupe (156) droit ou coudé est disposé sur le ou les coulisseaux de lame (12, 13).

3. Tête de perçage selon la revendication 2, **caractérisée en ce que** la partie saillante (110) présente sur son extrémité frontale au moins un évidement (166) pour un support de plaquette de coupe (156) coudé.

4. Tête de perçage selon l'une quelconque des revendications précédentes, **caractérisée en ce que** respectivement un coulisseau de lame (12, 13) et un coulisseau d'entraînement (14) sont reliés l'un à l'autre par une ou plusieurs tiges d'entraînement (30).

5. Tête de perçage selon l'une quelconque des revendications précédentes, **caractérisée en ce qu'**un mouvement relatif entre le coulisseau central (18) et le corps de base (1) est converti au moyen d'une denture hélicoïdale en un mouvement d'avance radial du ou des coulisseaux de lame (12, 13) .

6. Tête de perçage selon la revendication 5, **caractérisée en ce qu'**au moins une plaque dentée (10) est disposée sur le coulisseau central (18) et respectivement une autre plaque dentée (11) sur le ou les coulisseaux d'entraînement (14).

7. Tête de perçage selon l'une quelconque des revendications précédentes, **caractérisée en ce qu'**au moins un passage (118) est présent sur la transition entre le corps de base (1) et la partie saillante (110).

8. Tête de perçage selon l'une quelconque des revendications précédentes, **caractérisée en ce qu'**un manchon de raclage (27) est présent sur la transition entre le corps de base (1) et la partie saillante (110), et qu'un actionneur (4) disposé entre la barre de commande (3) et le coulisseau central (18) est entouré par le manchon de raclage (27).

9. Tête de perçage selon l'une quelconque des revendications précédentes, **caractérisée en ce qu'**au moins une poche (138) pour la réception d'une plaque dentée (10) et d'une plaque de réglage (15) est prévue dans le coulisseau central (18).

10. Tête de perçage selon l'une quelconque des revendications précédentes, **caractérisée en ce que** la partie saillante (110) présente sur son extrémité frontale une plaque de recouvrement avant (20) et une plaque de centrage (19).

11. Tête de perçage selon l'une quelconque des revendications précédentes, **caractérisée en ce que** le au moins un deuxième évidement (126) et le au moins un premier évidement (128) sont recouverts par des plaques de recouvrement (21, 22).

12. Tête de perçage selon l'une quelconque des revendications précédentes, **caractérisée en ce que** le coulisseau de lame (12, 13) et le support de plaquette de coupe (156) droit ou coudé sont conçus d'une seule pièce ou sous la forme de composants séparés.
